# EUROPEAN PATENT APPLICATION

(11) **EP 4 697 761 A1**
(43) Date of publication of application: **18.02.2026**
(21) Application number: 23932484.1
(22) Date of filing: 13.04.2023
(51) Int. Cl.: H04W 4/06

(54) **PHYSICAL DOWNLINK CONTROL CHANNEL (PDCCH) RESOURCE CONFIGURATION METHOD AND APPARATUS**

(71) Applicant: Beijing Xiaomi Mobile Software Co., Ltd., Beijing 100085 (CN)
(72) Inventor: MU, Qin, Beijing 100085 (CN)
(74) Representative: Gunzelmann, Rainer
(86) International application number: PCT/CN2023/088235
(87) International publication number: WO 2024/212197

(57) **Abstract**

Disclosed in the embodiments of the present application are a physical downlink control channel (PDCCH) resource configuration method and apparatus. The method comprises: determining a candidate configuration set of a control resource set CORESET# 0 corresponding to a PDCCH, wherein the candidate configuration set is a first configuration set or a second configuration set, and at least one configuration in the first configuration set is different from that in the second configuration set; and sending first indication information to a terminal device, wherein the first indication information is used for indicating a configuration of the CORESET# 0 from the candidate configuration set, Therefore, the configuration of the control resource set CORESET# 0 for bearing a common channel can be flexibly determined on the basis of a communication scenario, an actual transmission condition, etc., such that resource configuration is more rational, the resource utilization rate is effectively improved, the channel transmission performance is improved, and the reliability of communication transmission is ensured.

## Description

### TECHNICAL FIELD

The present disclosure relates to a field of wireless communication technologies, and specifically to a method and an apparatus for configuring a physical downlink control channel (PDCCH) resource.

### BACKGROUND

In the Third Generation Partnership Project Release 18 (R18), studies are conducted on partial dedicated spectrum support for new radio (NR) technology in a long term evolution (LTE) system/global system for mobile communications-railway (GSM-R). These spectrum resources primarily serve dedicated services such as dedicated communication for power systems/railway systems and public protection and disaster relief in specific countries and regions. Typically, system bandwidths supported by these spectrum resources are only 2.8 MHz to 3.6 MHz.

### SUMMARY

According to a first aspect of the embodiments of the present disclosure, a method for configuring a physical downlink control channel (PDCCH) resource is provided. The method is performed by a network device and includes:
determining a candidate configuration set of a control resource set (CORESET) #0 corresponding to a PDCCH, in which the candidate configuration set is a first configuration set or a second configuration set, and there is at least one different configuration between the first configuration set and the second configuration set; and
sending first indication information to a terminal, in which the first indication information indicates a configuration of the CORESET#0 from the candidate configuration set.

According to a second aspect of the embodiments of the present disclosure, a method for configuring a PDCCH resource is provided. The method is performed by a terminal and includes:
determining a candidate configuration set of a CORESET#0 corresponding to a PDCCH, in which the candidate configuration set is a first configuration set or a second configuration set, and there is at least one different configuration between the first configuration set and the second configuration set; and
receiving first indication information sent by a network device, in which the first indication information indicates a configuration of the CORESET#0 from the candidate configuration set.

According to a third aspect of the embodiments of the present disclosure, an apparatus for configuring a PDCCH resource is provided. The apparatus includes:
a processing unit, configured to determine a candidate configuration set of a CORESET#0 corresponding to a PDCCH, in which the candidate configuration set is a first configuration set or a second configuration set, and there is at least one different configuration between the first configuration set and the second configuration set; and
a transceiver unit, configured to send first indication information to a terminal, in which the first indication information indicates a configuration of the CORESET#0 from the candidate configuration set.

According to a fourth aspect of the embodiments of the present disclosure, an apparatus for configuring a PDCCH resource is provided. The apparatus is applied to a terminal and includes:
a processing unit, configured to determine a candidate configuration set of a CORESET#0 corresponding to a PDCCH, in which the candidate configuration set is a first configuration set or a second configuration set, and there is at least one different configuration between the first configuration set and the second configuration set; and
a transceiver unit, configured to receive first indication information sent by a network device, in which the first indication information indicates a configuration of the CORESET#0 from the candidate configuration set.

According to a fifth aspect of the embodiments of the present disclosure, a communication device is provided. The communication device includes a processor and a memory storing a computer program that, when executed by the processor, the communication device is caused to implement the method for configuring a PDCCH resource according to the above first aspect of the embodiments.

According to a sixth aspect of the embodiments of the present disclosure, a communication device is provided. The communication device includes a processor and a memory storing a computer program that, when executed by the processor, the device is caused to implement the method for configuring a PDCCH resource according to the above second aspect of the embodiments.

According to a seventh aspect of the embodiments of the present disclosure, a communication device is provided. The communication device includes a processor and an interface circuit, in which the interface circuit is configured to receive code instructions and transmit the code instructions to the processor; and the processor is configured to execute the code instructions to implement the method for configuring a PDCCH resource according to the above first aspect of the embodiments.

According to an eighth aspect of the embodiments of the present disclosure, a communication device is provided. The communication device includes a processor and an interface circuit, in which the interface circuit is configured to receive code instructions and transmit the code instructions to the processor; and the processor is configured to execute the code instructions to implement the method for configuring a PDCCH resource according to the above second aspect of the embodiments.

According to a ninth aspect of the embodiments of the present disclosure, a computer-readable storage medium for storing instructions is provided. When the instructions are executed, the method for configuring a PDCCH resource according to the above first aspect of the embodiments is implemented.

According to a tenth aspect of the embodiments of the present disclosure, a computer-readable storage medium for storing instructions is provided. When the instructions are executed, the method for configuring a PDCCH resource according to the above second aspect of the embodiments is implemented.

According to an eleventh aspect of the embodiments of the present disclosure, a computer program is provided. When the computer program is running on a computer, the computer is caused to implement the method for configuring a PDCCH resource according to the above first aspect of the embodiments.

According to a twelfth aspect of the embodiments of the present disclosure, a computer program is provided. When the computer program is running on a computer, the computer is caused to implement the method for configuring a PDCCH resource according to the above second aspect of the embodiments.

In the method and the apparatus for configuring a PDCCH resource provided by the embodiments of the present disclosure, the candidate configuration set of the CORESET#0 corresponding to the PDCCH is determined, in which the candidate configuration set is the first configuration set or the second configuration set, and there is the at least one different configuration between the first configuration set and the second configuration set; and the first indication information is sent to the terminal, in which the first indication information indicates the configuration of the CORESET#0 from the candidate configuration set. In this way, a configuration of the CORESET#0 carrying a common channel is flexibly determined based on a communication scenario, the actual transmission condition, etc., the resource configuration is more reasonable, the resource utilization rate is effectively improved, the channel transmission performance is improved, and the reliability of communication transmission is ensured.

Additional aspects and advantages of embodiments of present disclosure is given in part in the following descriptions, become apparent in part from the following descriptions, or be learned from the practice of the embodiments of the present disclosure.

### BRIEF DESCRIPTION OF THE DRAWINGS

In order to more clearly illustrate the technical solutions in the embodiments of the present disclosure or the background, the accompanying drawings required in the embodiments of the present disclosure or the background will be described below.
FIG. 1 is a schematic diagram of an architecture of a communication system according to an embodiment of the present disclosure.
FIG. 2 is a flowchart of a method for configuring a physical downlink control channel (PDCCH) resource according to an embodiment of the present disclosure.
FIG. 3 is a flowchart of a method for configuring a PDCCH resource according to an embodiment of the present disclosure.
FIG. 4 is a flowchart of a method for configuring a PDCCH resource according to an embodiment of the present disclosure.
FIG. 5 is a flowchart of a method for configuring a PDCCH resource according to an embodiment of the present disclosure.
FIG. 6 is a flowchart of a method for configuring a PDCCH resource according to an embodiment of the present disclosure.
FIG. 7 is a flowchart of a method for configuring a PDCCH resource according to an embodiment of the present disclosure.
FIG. 8 is a flowchart of a method for configuring a PDCCH resource according to an embodiment of the present disclosure.
FIG. 9 is a flowchart of a method for configuring a PDCCH resource according to an embodiment of the present disclosure.
FIG. 10 is a block diagram of an apparatus for configuring a PDCCH resource according to an embodiment of the present disclosure.
FIG. 11 is a block diagram of an apparatus for configuring a PDCCH resource according to an embodiment of the present disclosure.
FIG. 12 is a block diagram of another device for configuring a PDCCH resource according to an embodiment of the present disclosure.
FIG. 13 is a block diagram of a chip according to an embodiment of the present disclosure.

### DETAILED DESCRIPTION

Exemplary embodiments will be described in detail herein, examples of which are illustrated in the accompanying drawings. When the following description refers to the accompanying drawings, the same or similar elements may be denoted by the same reference numerals in different accompanying drawings, unless otherwise indicated. The implementations described in the following exemplary embodiments do not represent all implementations consistent with the present disclosure. Instead, they are merely examples of apparatuses and methods consistent with some aspects of the present disclosure as detailed in the appended claims.

The term used in the present disclosure is merely for the purpose of describing a detailed embodiment, and is not intended to limit the present disclosure. As used in the present disclosure and the appended claims, a singular form "a" or "the" is also intended to include plural forms, unless the context clearly indicates other meaning. It may also be understood that, the term "and/or" as used herein refers to including any or all possible combinations of one or more associated listed items.

It may be understood that, although terms "first, second, third and the like" may be employed in the present disclosure to describe various kinds of information, the information should not be limited to these terms. These terms are merely used to distinguish the same type of information from each other. For example, without departing from a scope of the present disclosure, first information may also be called second information, and similarly, second information may also be called first information. Depending on the context, the word "if" as used herein may be interpreted as "when" or "in a case that..." or "in response to a determination".

The embodiments of the present disclosure are described in detail below. Examples of the embodiments are shown in the accompanying drawings, in which the same or similar reference numerals throughout the present disclosure represent the same or similar elements or elements having the same or similar functions. The embodiments below with reference to the accompanying drawings are exemplary and are intended to explain the present disclosure, but should not be construed as a limitation to the present disclosure.

In order to better understand the method for configuring a PDCCH resource disclosed by the embodiments of the present disclosure, a communication system applicable to the embodiments of the present disclosure is first described below.

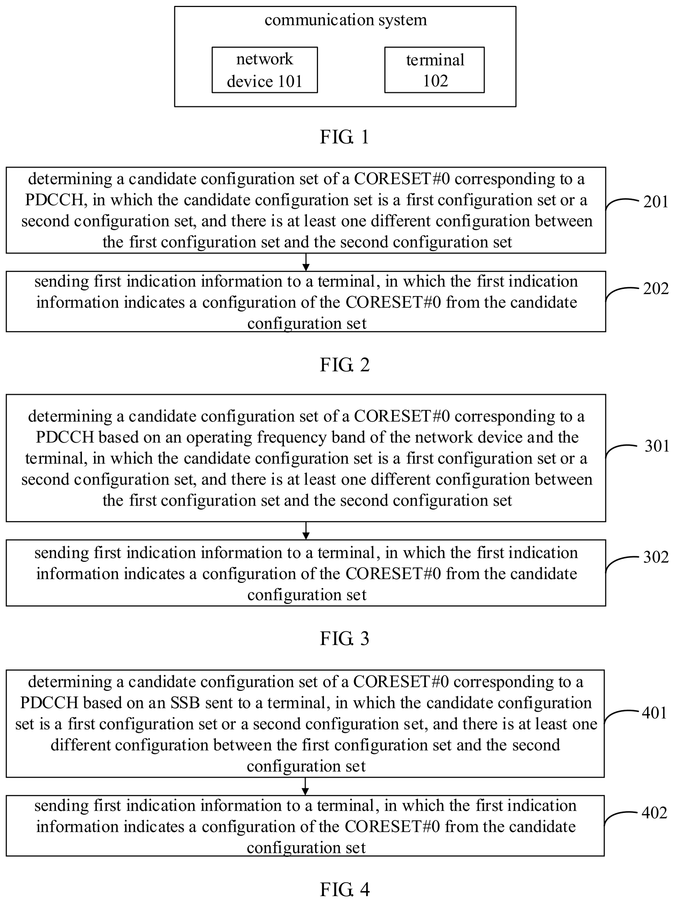

Referring to FIG. 1, FIG. 1 is a schematic diagram of an architecture of a communication system according to the embodiments of the present disclosure. The communication system may include, but is not limited to, a first network device and a terminal. The number and form of devices shown in FIG. 1 are only used for example and do not constitute a limitation in the embodiments of the present disclosure, and two or more network devices and two or more terminals may be included in an actual application. The communication system shown in FIG. 1 including one network device 101 and one terminal 102 is taken as an example.

It needs to be noted that the technical solution of embodiments of the present disclosure may be applied to various communication systems, such as, a long term evolution (LTE) system, a 5th generation (5G) mobile communication system, a 5G new radio (NR) system, or another future new mobile communication system.

The network device 101 in the embodiments of the present disclosure is an entity for sending or receiving a signal at a network side. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Detailed technologies and detailed device forms employed by the network device are not limited in the embodiments of the present disclosure. The network device provided in the embodiments of the present disclosure may be combined by a central unit (CU) and distributed units (DUs). The CU may also be referred to as a control unit. A protocol layer of the network device, such as the base station, may be separated by employing a CU-DU structure, in which, part of functions of the protocol layer are centrally controlled by the CU, while part or all of remaining functions of the protocol layer are distributed in the DUs. The DUs are controlled by the CU.

The terminal 102 in the embodiments of the present disclosure is an entity for receiving or sending a signal at a user side, such as, a mobile phone. The terminal may also be referred to as a terminal device, a user equipment (UE), a mobile station (MS), a mobile terminal (MT), or the like, or may be a reduced capability (RedCap) terminal, an evolved reduced capability (eRedCap) terminal, a non-eRedCap terminal, or the like. The terminal may be an automobile with a communication function, a smart automobile, a mobile phone, a wearable device, a pad, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, a wireless terminal in a smart home, and the like. Detailed technologies and detailed device forms employed by the terminal are not limited in the embodiments of the present disclosure.

In R18, studies are conducted on partial dedicated spectrum support for NR technology in a long term evolution (LTE) system/global system for mobile communications-railway (GSM-R). These spectrum resources primarily serve dedicated services such as dedicated communication for power systems/railway systems and public protection and disaster relief in specific countries and regions. Typically, system bandwidths supported by these spectrum resources are only 2.8 MHz to 3.6 MHz.

In an NR system, a transmission area where a physical downlink control channel (PDCCH) may be transmitted is called a control resource set (CORESET). The CORESET includes a plurality of physical resource blocks (PRBs) in a frequency domain. CORESET#0 is mainly used to carry a common control channel, and its occupied frequency resources are indicated by a pdcch-ConfigSIB information field in a master indication block (MIB) message. The pdcch-ConfigSIB information field may indicate an index in a pre-defined configuration table in a protocol. Based on the configuration table and the index indicated in the MIB message, the terminal may determine parameters such as a number of resource blocks (RBs) included in the CORESET#0, a number of occupied orthogonal frequency division multiplexing (OFDM) symbols, and an offset relative to a primary synchronization signal (PSS)/a secondary synchronization signal (SSS).

In the related art, a minimum bandwidth occupied by the CORESET#0 in the pre-defined configuration table in the protocol is 24 PRBs, which is larger than the transmission bandwidth in the above dedicated frequency band. Therefore, it may be necessary to introduce a new configuration table for the CORESET#0 to match the transmission in the dedicated frequency band.

It may be understood that the communication system in embodiments of the present disclosure is to more clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solutions in the embodiments of the present disclosure are also applicable to similar technical problems.

The method and the apparatus for configuring a PDCCH resource provided by the present disclosure are described in detail below with reference to the accompanying drawings.

Refer to FIG. 2, FIG. 2 is a flowchart of a method for configuring a PDCCH resource according to the embodiments of the present disclosure. It needs to be noted that the method for configuring a PDCCH resource in the embodiments of the present disclosure is performed by a network device. The method may be performed independently or in combination with any other embodiment of the present disclosure. As shown in FIG. 2, the method may include following steps at 201 to 202.

At 201, a candidate configuration set of a CORESET#0 corresponding to a PDCCH is determined, in which the candidate configuration set is a first configuration set or a second configuration set, and there is at least one different configuration between the first configuration set and the second configuration set.

In the embodiments of the present disclosure, the network device may determine the candidate configuration set of the CORESET#0 corresponding to the PDCCH, in which the candidate configuration set is the first configuration set or the second configuration set, and there is the at least one different configuration between the first configuration set and the second configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in the form of a table. For example, the second configuration set is shown in Table 1 below:

**Table 1 CORESET#0 Configuration Set**

| Index | SSB and CORESET multiplexing pattern | Number of RBs | Number of Symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Similarly, the first configuration set may also be presented in the form of a table. Then, that there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from the configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It should be understandable that each element in Table 1 exists independently. These elements are exemplarily listed in a same table, but this does not mean that all elements in the table should exist simultaneously as shown in the table. A value of each element does not depend on a value of any other element in Table 1. Therefore, those skilled in the art may understand that the value of each element in Table 1 is an independent embodiment.

**In** some implementations, the network device may determine whether the candidate configuration set of the terminal is the first configuration set or the second configuration set based on an operating frequency band of the network device and the terminal.

Optionally, if the operating frequency band of the network device and the terminal belongs to a first frequency band, the network device may determine that the candidate configuration set is the first configuration set; or,
if the operating frequency band of the network device and the terminal does not belong to the first frequency band, the network device may determine that the candidate configuration set is the second configuration set.

Optionally, the first frequency band includes any one or more of following frequency bands: n100; n8; n26; and n28.

It needs to be noted that n100, n8, n26, and n28 are all band numbers defined in a 5G NR system and may be used to deploy an NR system with a small bandwidth. An available bandwidth of n8 band, n26 band, and n28 band is about 3MHz, and an available bandwidth of n100 band is 5.6MHz.

In some implementations, the network device may determine whether the candidate configuration set is the first configuration set or the second configuration set based on a synchronization signal and physical broadcast channel block (SSB) that is sent to the terminal.

Optionally, the SSB is completely sent to the terminal, and the network device is able to determine that the candidate configuration set is the second configuration set; or,

the SSB is not completely sent to the terminal, and the network device is able to determine that the candidate configuration set is the first configuration set.

It may be understood that the network device is able to know whether an actually transmitted SSB is complete, and determine the candidate configuration set of the terminal based on an actual transmission situation of the SSB.

In some implementations, after determining the candidate configuration set, the network device is further able to send second indication information included in a physical broadcast channel (PBCH) to the terminal, in which the second indication information indicates whether the candidate configuration set is the first configuration set or the second configuration set.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

That is, the idle bit in the PBCH may be used to indicate the candidate configuration set, or the information field in the PBCH indicating the subcarrier spacing may be reused to indicate the candidate configuration set, or the information field in the PBCH indicating the offset between the SSB and the CORESET#0 may be reused to indicate the candidate configuration set.

In some implementations, after determining the candidate configuration set, the network device is further able to send the SSB to the terminal, in which a frequency domain position in which a synchronization raster (sync raster) corresponding to the SSB is located is used by the terminal to determine the candidate configuration set.

That is, after determining the candidate configuration set, the network device is further able to implicitly indicate the candidate configuration set to be used to the terminal via the frequency domain position in which the sync raster corresponding to the SSB is located.

Optionally, if the sync raster corresponding to the SSB is a sync raster in set#1, the sync raster may be used to implicitly indicate that the candidate configuration set is the first configuration set; and
if the sync raster corresponding to the SSB is a sync raster in set#2, the sync raster may be used to implicitly indicate that the candidate configuration set is the second configuration set.

At S202, first indication information is sent to a terminal, in which the first indication information indicates a configuration of the CORESET#0 from the candidate configuration set.

In the embodiments of the present disclosure, after determining the candidate configuration set used by the terminal, the network device is able to send the first indication information to the terminal, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the candidate configuration set of the CORESET#0 corresponding to the PDCCH is determined, in which the candidate configuration set is the first configuration set or the second configuration set, and there is the at least one different configuration between the first configuration set and the second configuration set; and the first indication information is sent to the terminal, in which the first indication information indicates the configuration of the CORESET#0 from the candidate configuration set. In this way, a configuration of the CORESET#0 carrying a common channel is flexibly determined based on a communication scenario, the actual transmission condition, and the like, the resource configuration is more reasonable, the resource utilization rate is effectively improved, the channel transmission performance is improved, and the reliability of communication transmission is ensured.

Refer to FIG. 3, FIG. 3 is a flowchart of a method for configuring a PDCCH resource according to an embodiment of the present disclosure. It needs to be noted that the method for configuring a PDCCH resource in the embodiment of the present disclosure is performed by a network device. The method may be performed independently, or may be performed in combination with any other embodiment of the present disclosure. As shown in FIG. 3, the method may include following steps at 301 to 304.

At 301, a candidate configuration set of a CORESET #0 corresponding to a PDCCH is determined based on an operating frequency band of the network device and the terminal, in which the candidate configuration set is a first configuration set or a second configuration set, and there is at least one different configuration between the first configuration set and the second configuration set.

In the embodiments of the present disclosure, the network device is able to determine, based on the operating frequency band of the network device and the terminal, whether the candidate configuration set of the CORESET#0 corresponding to the PDCCH of the terminal is the first configuration set or the second configuration set. The candidate configuration set is the first configuration set or the second configuration set, and there is the at least one different configuration between the first configuration set and the second configuration set.

Optionally, if the operating frequency band of the network device and the terminal belongs to the first frequency band, the network device may determine that the candidate configuration set is the first configuration set; or,
if the operating frequency band of the network device and the terminal does not belong to the first frequency band, the network device may determine that the candidate configuration set is the second configuration set.

Optionally, the first frequency band includes any one or more of following frequency bands: n100; n8; n26; and n28.

It needs to be noted that n100, n8, n26, and n28 are all band numbers defined in a 5G NR system and may be used to deploy an NR system with a small bandwidth. An available bandwidth of n8 band, n26 band, and n28 band is about 3MHz, and an available bandwidth of n100 band is 5.6MHz.

As an example, if the operating frequency band of the network device and the terminal is any one of n100, n8, n26, and n28, it is determined that the candidate configuration set is the first configuration set; if the operating frequency band of the network device and the terminal is any other frequency band, it is determined that the candidate configuration set is the second configuration set.

As another example, if the operating frequency band of the network device and the terminal is any one of n8, n26, and n28, it is determined that the candidate configuration set is the first configuration set; if the operating frequency band of the network device and the terminal is any other frequency band, it is determined that the candidate configuration set is the second configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in the form of a table. For example, the second configuration set is shown in a following table (consistent with the above Table 1):

### CORESET#0 Configuration Set

| Index | SSB and CORESET multiplexing pattern | Number of RBs | Number of Symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Similarly, the first configuration set may also be presented in the form of a table. That there is the at least one different configuration between the first configuration set and the second configuration set may refer to one or more of:

a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);

at least one row of configurations in the first configuration set (table) is different from the configurations in the second configuration set (table), i.e., the first configuration set includes the at least one configuration that is different from the configurations in the second configuration set; and

at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 302, first indication information is sent to a terminal, in which the first indication information indicates a configuration of the CORESET#0 from the candidate configuration set.

In the embodiments of the present disclosure, after determining the candidate configuration set used by the terminal, the network device is able to send the first indication information to the terminal, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In some implementations, before S302, the embodiments of the present disclosure may further include S303 and/or S304 (not shown in the drawing) to indicate the candidate configuration set to the terminal.

At 303, second indication information included in a PBCH is sent to the terminal, in which the second indication information indicates the candidate configuration set.

In some implementations, after determining the candidate configuration set, the network device is further able to send the second indication information included in the PBCH to the terminal, in which the second indication information indicates whether the candidate configuration set is the first configuration set or the second configuration set.

Optionally, the second indication information is an idle bit in the PBCH; or
the second indication information is an information field in the PBCH indicating a subcarrier spacing; or
the second indication information is an information field in the PBCH indicating an offset between an SSB and the CORESET#0.

That is, the idle bit in the PBCH may be used to indicate the candidate configuration set, or the information field in the PBCH indicating the subcarrier spacing may be reused to indicate the candidate configuration set, or the information field in the PBCH indicating the offset between the SSB and the CORESET#0 may be reused to indicate the candidate configuration set.

At 304, the SSB is sent to the terminal, in which a frequency domain position in which a sync raster corresponding to the SSB is located is used by the terminal to determine the candidate configuration set.

In some implementations, after determining the candidate configuration set, the network device is further able to send the SSB to the terminal, in which the frequency domain position in which a sync raster corresponding to the SSB is located is used by the terminal to determine the candidate configuration set.

That is, after determining the candidate configuration set, the network device is further able to implicitly indicate the candidate configuration set to be used to the terminal via the frequency domain position in which the sync raster corresponding to the SSB is located.

As an example, optionally, if the sync raster corresponding to the SSB is a sync raster in set#1, the sync raster may be used to implicitly indicate that the candidate configuration set is the first configuration set; and
if the sync raster corresponding to the SSB is a sync raster in set#2, the sync raster may be used to implicitly indicate that the candidate configuration set is the second configuration set.

In summary, the candidate configuration set of the CORESET#0 corresponding to the PDCCH is determined based on the operating frequency band of the network device and the terminal. The candidate configuration set is the first configuration set or the second configuration set. There is the at least one different configuration between the first configuration set and the second configuration set. The first indication information is sent to the terminal. The first indication information indicates the configuration of the CORESET#0 from the candidate configuration set. In this way, a configuration of the CORESET#0 carrying a common channel is flexibly determined based on a communication scenario, an actual transmission condition, and the like, the resource configuration is more reasonable, the resource utilization rate is effectively improved, the channel transmission performance is improved, and the reliability of communication transmission is ensured.

Refer to FIG. 4, FIG. 4 is a flowchart of a method for configuring a PDCCH resource according to an embodiment of the present disclosure. It needs to be noted that the method for configuring a PDCCH resource in the embodiment of the present disclosure is performed by a network device. The method may be performed independently, or may be performed in combination with any other embodiment of the present disclosure. As shown in FIG. 4, the method may include following steps at 401 to 404.

At 401, a candidate configuration set of a CORESET#0 corresponding to a PDCCH is determined based on an SSB sent to a terminal, in which the candidate configuration set is a first configuration set or a second configuration set, and there is at least one different configuration between the first configuration set and the second configuration set.

In the embodiments of the present disclosure, the network device is able to determine, based on the SSB sent to the terminal, whether the candidate configuration set is the first configuration set or the second configuration set.

Optionally, if the SSB is completely sent to the terminal, the network device is able to determine that the candidate configuration set is the second configuration set; or,
if the SSB is not completely sent to the terminal, the network device is able to determine that the candidate configuration set is the first configuration set.

It may be understood that the network device is able to know whether an actually transmitted SSB is complete, and determine the candidate configuration set of the terminal based on an actual transmission situation of the SSB.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a configuration item in the second configuration set.

As an example, both the first configuration set and the second configuration set are presented in the form of a table. For example, the second configuration set is shown in a table in any one of the above embodiments.

Similarly, the first configuration set may also be presented in the form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from the configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 402, first indication information is sent to a terminal, in which the first indication information indicates a configuration of the CORESET#0 from the candidate configuration set.

In the embodiments of the present disclosure, after determining the candidate configuration set used by the terminal, the network device is able to send the first indication information to the terminal, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In some implementations, before 402, the embodiments of the present disclosure may further include 403 and/or 404 (not shown in the drawing) to indicate a determined candidate configuration set to the terminal.

At 403, second indication information included in a PBCH is sent to the terminal, in which the second indication information indicates the candidate configuration set.

In some implementations, after determining the candidate configuration set, the network device is further able to send the second indication information included in the PBCH to the terminal, in which the second indication information indicates whether the candidate configuration set is the first configuration set or the second configuration set.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

That is, the idle bit in the PBCH may be used to indicate the candidate configuration set, or the information field in the PBCH indicating the subcarrier spacing may be reused to indicate the candidate configuration set, or the information field in the PBCH indicating the offset between the SSB and the CORESET#0 may be reused to indicate the candidate configuration set.

At 404, the SSB is sent to the terminal, in which a frequency domain position in which a sync raster corresponding to the SSB is located is used by the terminal to determine the candidate configuration set.

In some implementations, after determining the candidate configuration set, the network device is further able to send the SSB to the terminal, in which the frequency domain position in which the sync raster corresponding to the SSB is located is used by the terminal to determine the candidate configuration set.

That is, after determining the candidate configuration set, the network device is further able to implicitly indicate the candidate configuration set to be used to the terminal via the frequency domain position in which the sync raster corresponding to the SSB is located.

As an example, optionally, if the sync raster corresponding to the SSB is a sync raster in set#1, the sync raster may be used to implicitly indicate that the candidate configuration set is the first configuration set; and
if the sync raster corresponding to the SSB is a sync raster in set#2, the sync raster may be used to implicitly indicate that the candidate configuration set is the second configuration set.

In summary, the candidate configuration set of the CORESET#0 corresponding to the PDCCH is determined based on the SSB sent to the terminal. The candidate configuration set is the first configuration set or the second configuration set. There is the at least one different configuration between the first configuration set and the second configuration set. The first indication information is sent to the terminal. The first indication information indicates the configuration of the CORESET#0 from the candidate configuration set. In this way, a configuration of the CORESET#0 carrying a common channel is flexibly determined based on a communication scenario, an actual transmission condition, and the like, the resource configuration is more reasonable, the resource utilization rate is effectively improved, the channel transmission performance is improved, and the reliability of communication transmission is ensured.

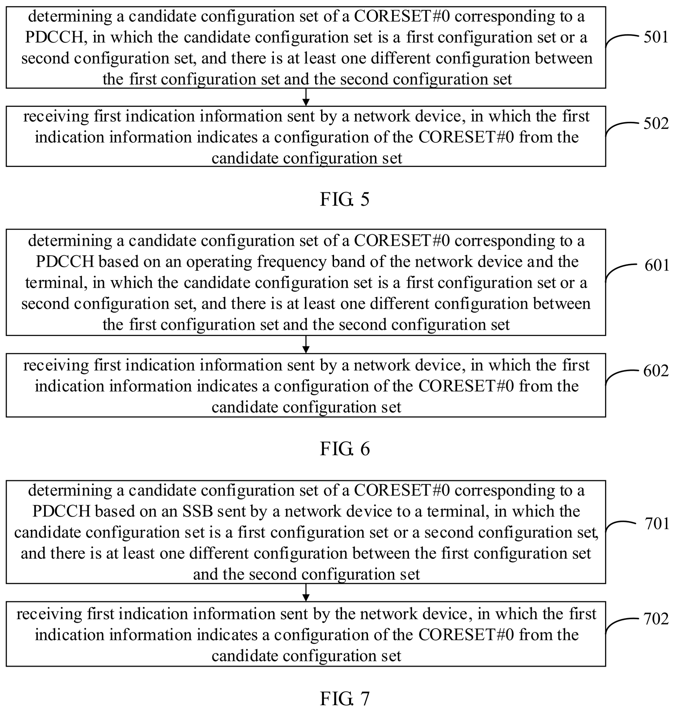

Refer to FIG. 5, FIG. 5 is a flowchart of a method for configuring a PDCCH resource according to an embodiment of the present disclosure. It needs to be noted that the method for configuring a PDCCH resource in the embodiment of the present disclosure is performed by a terminal. The method may be performed independently, or may be performed in combination with any other embodiment of the present disclosure. As shown in FIG. 5, the method may include following steps at 501 to 502.

At 501, a candidate configuration set of a CORESET#0 corresponding to a PDCCH is determined, in which the candidate configuration set is a first configuration set or a second configuration set, and there is at least one different configuration between the first configuration set and the second configuration set.

In the embodiments of the present disclosure, the terminal is also able to determine the candidate configuration set of the CORESET#0 corresponding to the PDCCH, in which the candidate configuration set is the first configuration set or the second configuration set, and there is the at least one different configuration between the first configuration set and the second configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in the form of a table. For example, the second configuration set is shown in a following table.

### CORESET#0 Configuration Set

| Index | SSB and CORESET multiplexing pattern | Number of RBs | Number of Symbols | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Similarly, the first configuration set may also be presented in a form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from the configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

In some implementations, the terminal may determine whether the candidate configuration set of the terminal is the first configuration set or the second configuration set based on an operating frequency band of the network device and the terminal.

Optionally, if the operating frequency band of the network device and the terminal belongs to a first frequency band, the terminal may determine that the candidate configuration set is the first configuration set; or,
if the operating frequency band of the network device and the terminal does not belong to the first frequency band, the terminal may determine that the candidate configuration set is the second configuration set.

Optionally, the first frequency band includes any one or more of following frequency bands: n100; n8; n26; and n28.

It needs to be noted that n100, n8, n26, and n28 are all band numbers defined in a 5G NR system and may be used to deploy an NR system with a small bandwidth. An available bandwidth of n8 band, n26 band, and n28 band is about 3MHz, and an available bandwidth of n100 band is 5.6MHz.

In some implementations, the terminal may determine whether the candidate configuration set is the first configuration set or the second configuration set based on the SSB sent by the network device to the terminal.

Optionally, if the SSB is an SSB that is completely sent to the terminal, the terminal is able to determine that the candidate configuration set is the second configuration set; or,
if the SSB is an SSB that is not completely sent to the terminal, the terminal is able to determine that the candidate configuration set is the first configuration set.

It may be understood that the terminal is able to know whether an actually transmitted SSB is complete, and determine the candidate configuration set of the terminal based on an actual transmission situation of the SSB.

In some implementations, the terminal is able to determine the candidate configuration set based on the second indication information included in a PBCH sent by the network device, in which the second indication information indicates whether the candidate configuration set is the first configuration set or the second configuration set.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

That is, the network device may use the idle bit in the PBCH to indicate the candidate configuration set to the terminal, or may reuse the information field in the PBCH indicating the subcarrier spacing to indicate the candidate configuration set, or may reuse the information field in the PBCH indicating the offset between the SSB and the CORESET#0 to indicate the candidate configuration set.

In some implementations, the terminal may determine the candidate configuration set based on a frequency domain position in which a sync raster corresponding to the SSB is located sent by the network device.

That is, after determining the candidate configuration set, the network device is further able to implicitly indicate the candidate configuration set to be used to the terminal via the frequency domain position in which the sync raster corresponding to the SSB is located.

Optionally, if the sync raster corresponding to the SSB is a sync raster in set# 1, the sync raster may be used to implicitly indicate that the candidate configuration set is the first configuration set; and
if the sync raster corresponding to the SSB is a sync raster in set#2, the sync raster may be used to implicitly indicate that the candidate configuration set is the second configuration set.

At 502, first indication information sent by the network device is received, in which the first indication information indicates a configuration of the CORESET#0 from the candidate configuration set.

In the embodiments of the present disclosure, the terminal is able to receive the first indication information sent by the network device, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the candidate configuration set of the CORESET#0 corresponding to the PDCCH is determined, in which the candidate configuration set is the first configuration set or the second configuration set. There is the at least one different configuration between the first configuration set and the second configuration set. The first indication information is sent to the terminal. The first indication information indicates the configuration of the CORESET#0 from the candidate configuration set. In this way, a configuration of the CORESET#0 carrying a common channel is flexibly determined based on a communication scenario, an actual transmission condition, and the like, the resource configuration is more reasonable, the resource utilization rate is effectively improved, the channel transmission performance is improved, and the reliability of communication transmission is ensured.

Refer to FIG. 6, FIG. 6 is a flowchart of a method for configuring a PDCCH resource according to an embodiment of the present disclosure. It needs to be noted that the method for configuring a PDCCH resource in the embodiment of the present disclosure is performed by a terminal. The method may be performed independently, or may be performed in combination with any other embodiment of the present disclosure. As shown in FIG. 6, the method may include following steps at 601 to 602.

At 601, a candidate configuration set of a CORESET#0 corresponding to a PDCCH is determined based on an operating frequency band of a network device and the terminal, in which the candidate configuration set is a first configuration set or a second configuration set, and there is at least one different configuration between the first configuration set and the second configuration set.

In the embodiments of the present disclosure, the terminal is able to determine, based on the operating frequency band of the network device and the terminal, whether the candidate configuration set of the CORESET#0 corresponding to the PDCCH of the terminal is the first configuration set or the second configuration set. There is the at least one different configuration between the first configuration set and the second configuration set.

Optionally, if the operating frequency band of the network device and the terminal belongs to the first frequency band, it is determined that the candidate configuration set is the first configuration set; or,
if the operating frequency band of the network device and the terminal does not belong to the first frequency band, it is determined that the candidate configuration set is the second configuration set.

Optionally, the first frequency band includes any one or more of following frequency bands: n100; n8; n26; and n28.

It needs to be noted that n100, n8, n26, and n28 are all band numbers defined in a 5G NR system and may be used to deploy an NR system with a small bandwidth. An available bandwidth of n8 band, n26 band, and n28 band is about 3MHz, and an available bandwidth of n100 band is 5.6MHz.

As an example, if the operating frequency band of the network device and the terminal is any one of n100, n8, n26, and n28, it is determined that the candidate configuration set is the first configuration set; if the operating frequency band of the network device and the terminal is any other frequency band, it is determined that the candidate configuration set is the second configuration set.

As another example, if the operating frequency band of the network device and the terminal is any one of n8, n26, and n28, it is determined that the candidate configuration set is the first configuration set; if the operating frequency band of the network device and the terminal is any other frequency band, it is determined that the candidate configuration set is the second configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a configuration item in the second configuration set.

As an example, both the first configuration set and the second configuration set are presented in the form of a table. For example, the second configuration set is shown in a table of any one of the above embodiments.

Similarly, the first configuration set may also be presented in the form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from the configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 602, first indication information sent by the network device is received, in which the first indication information indicates a configuration of the CORESET#0 from the candidate configuration set.

In the embodiments of the present disclosure, the terminal is able to receive the first indication information sent by the network device, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the candidate configuration set of the CORESET#0 corresponding to the PDCCH is determined based on the operating frequency band of the network device and the terminal. The candidate configuration set is the first configuration set or the second configuration set. There is the at least one different configuration between the first configuration set and the second configuration set. The first indication information sent by the network device is received. The first indication information indicates the configuration of the CORESET#0 from the candidate configuration set. In this way, a configuration of the CORESET#0 carrying a common channel is flexibly determined based on a communication scenario, an actual transmission condition, and the like, the resource configuration is more reasonable, the resource utilization rate is effectively improved, the channel transmission performance is improved, and the reliability of communication transmission is ensured.

Refer to FIG. 7, FIG. 7 is a flowchart of a method for configuring a PDCCH resource according to an embodiment of the present disclosure. It needs to be noted that the method for configuring a PDCCH resource in the embodiment of the present disclosure is performed by a terminal. The method may be performed independently, or may be performed in combination with any other embodiment of the present disclosure. As shown in FIG. 7, the method may include following steps at 701 to 702.

At 701, a candidate configuration set of a CORESET#0 corresponding to a PDCCH is determined based on an SSB sent by a network device to the terminal, in which the candidate configuration set is a first configuration set or a second configuration set, and there is at least one different configuration between the first configuration set and the second configuration set.

In some implementations, the terminal may determine whether the candidate configuration set is the first configuration set or the second configuration set based on the SSB sent by the network device to the terminal.

Optionally, if the SSB is an SSB that is completely sent to the terminal, the terminal is able to determine that the candidate configuration set is the second configuration set; or,
if the SSB is an SSB that is not completely sent to the terminal, the terminal is able to determine that the candidate configuration set is the first configuration set.

It may be understood that the terminal is able to know whether an actually transmitted SSB is complete, and determine the candidate configuration set of the terminal based on an actual transmission situation of the SSB.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in a form of a table. For example, the second configuration set is shown in the table of any one of the above embodiments.

Similarly, the first configuration set may also be presented in the form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 702, first indication information sent by the network device is received, in which the first indication information indicates a configuration of the CORESET#0 from the candidate configuration set.

In the embodiments of the present disclosure, the terminal is able to receive the first indication information sent by the network device, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the candidate configuration set of the CORESET#0 corresponding to the PDCCH is determined based on the operating frequency band of the network device and the terminal. The candidate configuration set is the first configuration set or the second configuration set. There is the at least one different configuration between the first configuration set and the second configuration set. The first indication information sent by the network device is received. The first indication information indicates the configuration of the CORESET#0 from the candidate configuration set. In this way, a configuration of the CORESET#0 carrying a common channel will be flexibly determined based on a communication scenario, an actual transmission condition, and the like, the resource configuration is more reasonable, the resource utilization rate is effectively improved, the channel transmission performance is improved, and the reliability of communication transmission is ensured.

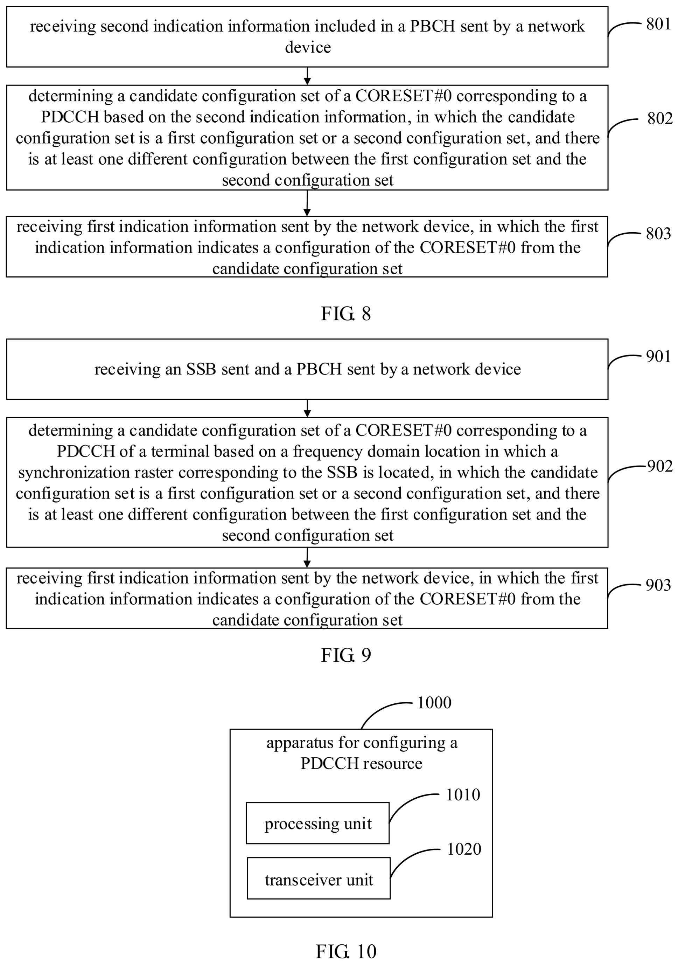

Refer to FIG. 8, FIG. 8 is a flowchart of a method for configuring a PDCCH resource according to an embodiment of the present disclosure. It needs to be noted that the method for configuring a PDCCH resource in the embodiment of the present disclosure is performed by a terminal. The method may be performed independently, or may be performed in combination with any other embodiment of the present disclosure. As shown in FIG. 8, the method may include following steps at 801 to 803.

At 801, second indication information included in a PBCH sent by a network device is received.

At 802, a candidate configuration set of a CORESET#0 corresponding to a PDCCH is determined based on the second indication information, in which the candidate configuration set is a first configuration set or a second configuration set, and there is at least one different configuration between the first configuration set and the second configuration set.

In the embodiments of the present disclosure, the terminal is able to receive the second indication information included in the PBCH sent by the network device, in which the second indication information indicates that the candidate configuration set of the terminal is the first configuration set, or the second indication information indicates that the candidate configuration set of the terminal is the second configuration set. The terminal is able to determine, according to the second indication information, whether the candidate configuration set is the first configuration set or the second configuration set.

It may be understood that the second indication information is sent by the network device after determining the candidate configuration set.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

That is, the network device may use the idle bit in the PBCH to indicate the candidate configuration set to the terminal, or may reuse the information field in the PBCH indicating the subcarrier spacing to indicate the candidate configuration set, or may reuse the information field in the PBCH indicating the offset between the SSB and the CORESET#0 to indicate the candidate configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in the form of a table. For example, the second configuration set is shown in a table of any one of the above embodiments.

Similarly, the first configuration set may also be presented in the form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 803, first indication information sent by the network device is received, in which the first indication information indicates a configuration of the CORESET#0 from the candidate configuration set.

In the embodiments of the present disclosure, the terminal is able to receive the first indication information sent by the network device, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the second indication information included in the PBCH sent by the network device is received; the candidate configuration set of the CORESET#0 corresponding to the PDCCH is determined based on the second indication information; and the first indication information sent by the network device is received, in which the first indication information indicates the configuration of the CORESET#0 from the candidate configuration set. In this way, a configuration of the CORESET#0 carrying a common channel will be flexibly determined based on a communication scenario, an actual transmission condition, and the like, the resource configuration will be more reasonable, the resource utilization rate is effectively improved, the channel transmission performance is improved, and the reliability of communication transmission is ensured.

Please refer to FIG. 9, FIG. 9 is a flowchart of a method for configuring a PDCCH resource according to an embodiment of the present disclosure. It needs to be noted that the method for configuring a PDCCH resource in the embodiment of the present disclosure is performed by a terminal. The method may be performed independently, or may be performed in combination with any other embodiment of the present disclosure. As shown in FIG. 9, the method may include following steps at 901 to 903.

At 901, an SSB sent by a network device is received.

At 902, a candidate configuration set of a CORESET#0 corresponding to a PDCCH of the terminal is determined based on a frequency domain position in which a sync raster corresponding to the SSB is located, in which the candidate configuration set is a first configuration set or a second configuration set, and there is at least one different configuration between the first configuration set and the second configuration set.

In the embodiments of the present disclosure, the terminal may determine the candidate configuration set based on a frequency domain position in which a sync raster corresponding to the SSB is located sent by the network device.

That is, after determining the candidate configuration set, the network device is further able to implicitly indicate the candidate configuration set to be used to the terminal via the frequency domain position in which the sync raster corresponding to the SSB is located.

As an example, optionally, if the sync raster corresponding to the SSB is a sync raster in set#1, the sync raster may be used to implicitly indicate that the candidate configuration set is the first configuration set; and
if the sync raster corresponding to the SSB is a sync raster in set#2, the sync raster may be used to implicitly indicate that the candidate configuration set is the second configuration set.

In the embodiments of the present disclosure, that there is the at least one different configuration between the first configuration set and the second configuration set may refer to any one or more of:
a number of configurations included in the first configuration set is different from a number of configurations included in the second configuration set;
the first configuration set includes at least one configuration that is different from configurations in the second configuration set; and
the first configuration set includes at least one parameter in a configuration item that is different from a parameter in a corresponding configuration item in the second configuration set.

As an example, both the first configuration set and the second configuration set are presented in the form of a table. For example, the second configuration set is shown in the table of any one of the above embodiments.

Similarly, the first configuration set may also be presented in the form of a table. That there is the at least one different configuration between the first configuration set and the second configuration set may refer to one or more of:
a number of rows included in the first configuration set (table) is different from a number of rows included in the second configuration set (table), i.e., the number of configurations included in the first configuration set is different from the number of configurations included in the second configuration set (for example, the first configuration set may only include 13 rows of configurations, meaning that only 13 indices correspond to specific configurations, with 3 rows reserved);
at least one row of configurations in the first configuration set (table) is different from configurations in the second configuration set (table), i.e., the first configuration set includes the at least one configuration that is different from the configurations in the second configuration set; and
at least one parameter value in at least one row of the first configuration set (table) is different from a parameter value in a corresponding row of the second configuration set (table), i.e., the first configuration set includes the at least one parameter in the configuration item that is different from the parameter in the configuration item in the second configuration set.

It may be understood that each element in the above table exists independently. These elements are exemplarily listed in a same table, but this does not mean that all elements in the table should exist simultaneously as shown in the table. A value of each element does not depend on a value of any other element in the above table. Therefore, those skilled in the art may understand that the value of each element in the table is an independent embodiment.

At 903, first indication information sent by the network device is received, in which the first indication information indicates a configuration of the CORESET#0 from the candidate configuration set.

In the embodiments of the present disclosure, the terminal is able to receive the first indication information sent by the network device, in which the first indication information indicates the configuration of the CORESET#0 from the candidate configuration set.

In some implementations, the first indication information is able to indicate an index value, and the terminal is able to determine, based on the index value, a configuration corresponding to the index value from the candidate configuration set.

In summary, the SSB sent by the network device is received; the candidate configuration set is determined based on the frequency domain position in which the sync raster corresponding to the SSB is located; and the first indication information sent by the network device is received, in which the first indication information indicates the configuration of the CORESET#0 from the candidate configuration set. In this way, a configuration of the CORESET#0 carrying a common channel will be flexibly determined based on a communication scenario, an actual transmission condition, and the like, the resource configuration will be more reasonable, the resource utilization rate will be effectively improved, the channel transmission performance is improved, and the reliability of communication transmission is ensured.

Corresponding to the method for configuring a PDCCH resource provided in the above several embodiments, the present disclosure further provides an apparatus for configuring a PDCCH resource. Since the apparatus for configuring a PDCCH resource provided in the embodiments of the present disclosure corresponds to the method provided in the above several embodiments, the implementations of the method for configuring a PDCCH resource are also applicable to the apparatus for configuring a PDCCH resource provided in the following embodiments, which will not be described in detail in following embodiments.

Refer to FIG. 10, FIG. 10 is a block diagram of an apparatus 1000 for configuring a PDCCH resource according to an embodiment of the present disclosure.

As shown in FIG. 10, the apparatus 1000 for configuring a PDCCH resource includes: a processing unit 1010 and a transceiver unit 1020.

The processing unit 1010 is configured to determine a candidate configuration set of a CORESET #0 corresponding to a PDCCH, in which the candidate configuration set is a first configuration set or a second configuration set, and there is at least one different configuration between the first configuration set and the second configuration set; and
the transceiver unit 1020 is configured to send first indication information to a terminal, in which the first indication information indicates a configuration of the CORESET#0 from the candidate configuration set.

Optionally, the processing unit 1010 is specifically configured to:
determine the candidate configuration set based on an operating frequency band of the network device and the terminal.

Optionally, in a case that the operating frequency band belongs to a first frequency band, the candidate configuration set is the first configuration set; or
in a case that the operating frequency band does not belong to a first frequency band, the candidate configuration set is the second configuration set.

Optionally, the processing unit 1010 is specifically configured to:
determine the candidate configuration set based on an SSB sent to the terminal.

Optionally, in a case that the SSB is completely sent to the terminal, the candidate configuration set is the second configuration set; or
in a case that the SSB is not completely sent to the terminal, the candidate configuration set is the first configuration set.

Optionally, the transceiver unit 1020 is further configured to:
send second indication information included in a PBCH to the terminal,
in which the second indication information indicates that the candidate configuration set is the first configuration set, or the second indication information indicates that the candidate configuration set is the second configuration set.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

Optionally, the transceiver unit 1020 is further configured to:
send the SSB to the terminal, in which a frequency domain position in which a sync raster corresponding to the SSB is located is used by the terminal to determine the candidate configuration set.

The apparatus for configuring a PDCCH resource in the embodiment may determine the candidate configuration set of the CORESET #0 corresponding to the PDCCH, in which the candidate configuration set is the first configuration set or the second configuration set, and there is the at least one different configuration between the first configuration set and the second configuration set; and send the first indication information to the terminal, in which the first indication information indicates the configuration of the CORESET#0 from the candidate configuration set. In this way, a configuration of the CORESET#0 carrying a common channel is flexibly determined based on a communication scenario, the actual transmission condition, and the like, the resource configuration is more reasonable, the resource utilization rate is effectively improved, the channel transmission performance is improved, and the reliability of communication transmission is ensured.

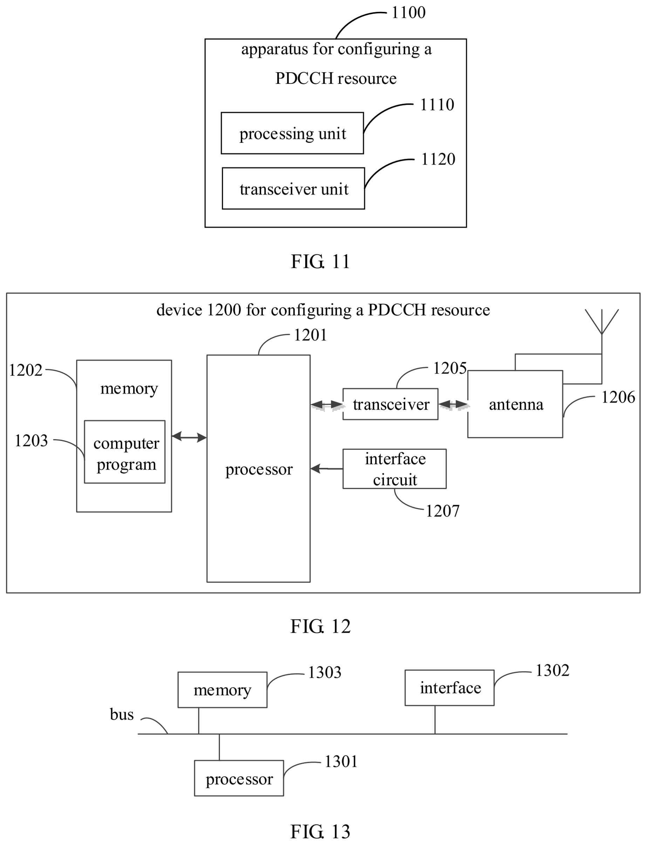

Refer to FIG. 11, FIG. 11 is a block diagram of an apparatus for configuring a PDCCH resource according to an embodiment of the present disclosure.

As shown in FIG. 11, the apparatus 1100 for configuring a PDCCH resource includes: a processing unit 1110 and a transceiver unit 1120.

The processing unit 1110 is configured to determine a candidate configuration set of a CORESET #0 corresponding to a PDCCH, in which the candidate configuration set is a first configuration set or a second configuration set, and there is at least one different configuration between the first configuration set and the second configuration set; and
the transceiver unit 1120 is configured to receive first indication information sent by a network device, in which the first indication information indicates a configuration of the CORESET#0 from the candidate configuration set.

Optionally, the processing unit 1110 is specifically configured to:
determine the candidate configuration set based on an operating frequency band of the network device and the terminal.

Optionally, in a case that the operating frequency band belongs to a first frequency band, the candidate configuration set is the first configuration set; or
in a case that the operating frequency band does not belong to a first frequency band, the candidate configuration set is the second configuration set.

Optionally, the processing unit 1110 is specifically configured to:
determine the candidate configuration set based on an SSB sent by the network device to the terminal.

Optionally, in a case that the SSB is completely sent to the terminal, the processing unit 1110 is configured to determine the candidate configuration set to be the second configuration set; or
in a case that the SSB is not completely sent to the terminal, the processing unit 1110 is configured to determine the candidate configuration set to be the first configuration set.

Optionally, the processing unit 1110 is specifically configured to:
receive second indication information included in a PBCH sent by the network device, in which the second indication information indicates that the candidate configuration set is the first configuration set, or the second indication information indicates that the candidate configuration set is the second configuration set; and
determine the candidate configuration set based on the second indication information.

Optionally, the second indication information is an idle bit in the PBCH; or
the second indication information is an information field in the PBCH indicating a subcarrier spacing; or
the second indication information is an information field in the PBCH indicating an offset between the SSB and the CORESET#0.

Optionally, the processing unit 1110 is specifically configured to:
receive an SSB sent by the network device; and
determine the candidate configuration set based on a frequency domain position in which a sync raster corresponding to the SSB is located.

The apparatus for configuring a PDCCH resource in the embodiment may determine the candidate configuration set of the CORESET #0 corresponding to the PDCCH, in which the candidate configuration set is the first configuration set or the second configuration set, and there is the at least one different configuration between the first configuration set and the second configuration set; and receive the first indication information sent by the network device, in which the first indication information indicates the configuration of the CORESET#0 from the candidate configuration set. In this way, a configuration of the CORESET#0 carrying a common channel is flexibly determined based on a communication scenario, an actual transmission condition, and the like, the resource configuration is more reasonable, the resource utilization rate is effectively improved, the channel transmission performance is improved, and the reliability of communication transmission is ensured.

To achieve the above embodiments, the embodiments of the present disclosure further provide a communication device, including a processor and a memory storing a computer program that, when executed by the processor, cause the device to implement the method shown in the embodiments of FIG. 2 to FIG. 4.

To achieve the above embodiments, the embodiments of the present disclosure further provide a communication device, including a processor and a memory storing a computer program that, when executed by the processor, cause the device to implement the method shown in the embodiments of FIG. 5 to FIG. 9.

To achieve the above embodiments, the embodiments of the present disclosure further provide a communication device, including a processor and an interface circuit, in which the interface circuit is configured to receive code instructions and transmit the code instructions to the processor; and the processor is configured to execute the code instructions to implement the method shown in the embodiments of FIG. 2 to FIG. 4.

To achieve the above embodiments, the embodiments of the present disclosure further provide a communication device, including a processor and an interface circuit, in which the interface circuit is configured to receive code instructions and transmit the code instructions to the processor; and the processor is configured to execute the code instructions to implement the method shown in the embodiments of FIG. 5 to FIG. 9.

Please refer to FIG. 12, FIG. 12 is a block diagram of a device 1200 for configuring a PDCCH resource according to an embodiment of the present disclosure. The device 1200 for configuring a PDCCH resource may be a network device, or a terminal, or a chip, a chip system, a processor, or the like that supports the network device to implement the method, or a chip, a chip system, a processor, or the like that supports the terminal to implement the method. The device 1200 is configured to implement the method in the above method embodiments. For details, refer to the description in the above method embodiments.

The device 1200 for configuring a PDCCH resource may include one or more processors 1201. The processor 1201 may be a general-purpose processor or a special-purpose processor. For example, it may be a baseband processor or a central processing unit. The baseband processor is configured to process communication protocols and communication data, and the central processor is configured to control the device for configuring a PDCCH resource (such as base stations, baseband chips, terminals, terminal chips, DU or CU, etc.) to execute a computer program and process computer program data.

Optionally, the device 1200 for configuring a PDCCH resource may also include one or more memories 1202 on which a computer program 1203 is stored. When the computer program 1203 is executed by the processor 1201, the device 1200 for configuring a PDCCH resource implements the method in the above method embodiments. The computer program 1203 may be solidified in the processor 1201. In this case, the processor 1201 may be implemented in hardware.

Optionally, data may also be stored in the memory 1202. The device 1200 for configuring a PDCCH resource and the memory 1202 may be set separately or integrated together.

Optionally, the device 1200 for configuring a PDCCH resource may also include a transceiver 1205 and an antenna 1206. The transceiver 1205 may be called a transceiving unit, a transceiving module, or a transceiving circuit, or the like, to achieve a transceiving function. The transceiver 1205 may include a receiver and a transmitter. The receiver may be called a receiving unit or a receiving circuit, or the like, to achieve a receiving function; and the transmitter may be called a transmitting unit or a transmitting circuit, etc., to achieve a transmitting function.

Optionally, the device 1200 for configuring a PDCCH resource may further include one or more interface circuits 1207. The interface circuit 1207 is configured to receive code instructions and transmit the code instructions to the processor 1201. When the code instructions are running on the processor 1201, the device 1200 for configuring a PDCCH resource is caused to implement the method in the above method embodiments.

In an implementation, the processor 1201 may include a transceiver configured to achieve the receiving and transmitting function. For example, the transceiver may be a transceiving circuit, or an interface, or an interface circuit. The transceiving circuit, the interface, or the interface circuit configured to achieve the receiving function and transmitting function may be set separately or integrated together. The transceiving circuit, the interface or the interface circuit may be configured to read and write code/data, or the transceiving circuit, the interface or the interface circuit may be configured to transmit signals.

In an implementation, the device 1200 for configuring a PDCCH resource may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic device, or the like. The processor and transceiver may also be fabricated using various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The device for configuring a PDCCH resource in the above embodiments may be a network device or a terminal, but the scope of the device for configuring a PDCCH resource in the present disclosure is not limited to this, and the structure of the device for configuring a PDCCH resource may not be restricted by FIG. 10 to FIG. 12. The device for configuring a PDCCH resource may be an independent device or part of a larger device. For example, the device for configuring a PDCCH resource may be:
(1) an independent IC, or a chip, or a chip system or a subsystem;
(2) a set including one or more IC, optionally, the IC set may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the device for configuring a PDCCH resource may be a chip or a chip system, please refer to FIG. 13, which is a block diagram of a chip according to the embodiments of the present disclosure. The chip in FIG. 13 includes a processor 1301 and an interface 1302. There may be one or more processors 1301, and there may be one or more interfaces 1302.

For the case where the chip is configured to implement functions of the network device in the embodiments of the present disclosure:
the interface 1302 is configured to receive code instructions and transmit the code instructions to the processor; and
the processor 1301 is configured to execute the code instructions to implement the methods as shown in FIG. 2 to FIG. 4.

In the case where the chip is configured to implement functions of the terminal in the embodiments of the present disclosure:
the interface 1302 is configured to receive code instructions and transmit the code instructions to the processor; and
the processor 1301 is configured to execute the code instructions to implement the methods as shown in FIG. 5 to FIG. 9.

Optionally, the chip further includes a memory 1303 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a function achieved by each method, but such implementation shall not be regarded as going beyond the scope of the protection of the embodiments of the present disclosure.

The embodiments of the present disclosure also provide a communication system. The system includes the apparatus for configuring a PDCCH resource as the network device and the apparatus for configuring a PDCCH resource as the terminal in the embodiments of FIG. 10 to FIG. 11 mentioned above, or, the system includes the device for configuring a PDCCH resource as the terminal and the device for configuring a PDCCH resource as the network device in the embodiment of FIG. 12 mentioned above.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general-purpose computer, a special-purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), a semiconductor medium (such as a solid state disk (SSD)), or the like.

Those skilled in the art may understand that various numbers such as first and second involved in the present disclosure are distinguished merely for convenience of description, and are not intended to limit the scope of embodiments of the present disclosure, but also not to indicate an order of precedence.

The term "at least one" in the present disclosure may also be described as one or more, and "more" may be two, three, four, or more, which is not limited in the present disclosure. In the embodiment of the present disclosure, for a technical feature, a technical feature in technical features are distinguished by terms "first", "second", "third", "A", "B", "C" and "D", etc., and the technical features described by the terms "first", "second", "third", "A", "B", "C" and "D", or the like are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps, hash lists, or hash tables may be used.

Predefined in the present disclosure may be understood as defined, pre-defined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, for convenience and simplicity of the description, a specific working process of a system, an apparatus and a unit described above may refer to a corresponding process in the above method embodiments, which will not be repeated here.

It may be understood that steps may be reordered, added or deleted using various forms of processes shown above. For example, each step described in the present disclosure may be executed in parallel, sequentially or in different orders, so long as a desired result of the technical solution disclosed in the present disclosure may be achieved, which is not limited here.

The above detailed embodiments do not limit the protection scope of the present disclosure. Those skilled in the art may understand that various modifications, combinations, sub-combinations and substitutions may be made according to a design requirement and other factors. Any modification, equivalent substitution and improvement made within the spirit and principles of the present disclosure shall be included in the protection scope of the present disclosure.

## Claims

1. A method for configuring a physical downlink control channel (PDCCH) resource, performed by a network device, comprising:
determining a candidate configuration set of a control resource set (CORESET) #0 corresponding to a PDCCH, wherein the candidate configuration set is a first configuration set or a second configuration set, and there is at least one different configuration between the first configuration set and the second configuration set; and
sending first indication information to a terminal, wherein the first indication information indicates a configuration of the CORESET#0 from the candidate configuration set.

2. The method of claim 1, wherein determining the candidate configuration set of the CORESET#0 corresponding to the PDCCH comprises:
determining the candidate configuration set based on an operating frequency band of the network device and the terminal.

3. The method of claim 2, wherein
in a case that the operating frequency band belongs to a first frequency band, the candidate configuration set is the first configuration set; or
in a case that the operating frequency band does not belong to a first frequency band, the candidate configuration set is the second configuration set.

4. The method of claim 1, wherein determining the candidate configuration set of the CORESET#0 corresponding to the PDCCH comprises:
determining the candidate configuration set based on a synchronization signal block (SSB) sent to the terminal.

5. The method of claim 4, wherein
in a case that the SSB is completely sent to the terminal, the candidate configuration set is the second configuration set; or
in a case that the SSB is not completely sent to the terminal, the candidate configuration set is the first configuration set.

6. The method of any one of claims 1 to 5, further comprising:
sending second indication information included in a physical broadcast channel (PBCH) to the terminal,
wherein the second indication information indicates that the candidate configuration set is the first configuration set, or the second indication information indicates that the candidate configuration set is the second configuration set.

7. The method of claim 6, wherein
the second indication information is an idle bit in the PBCH; or
the second indication information is an information field in the PBCH indicating a subcarrier spacing; or
the second indication information is an information field in the PBCH indicating an offset between a synchronization signal block (SSB) and the CORESET#0.

8. The method of any one of claims 1 to 5, further comprising:
sending a synchronization signal block (SSB) to the terminal, wherein a frequency domain position in which a synchronization raster corresponding to the SSB is located is used by the terminal to determine the candidate configuration set.

9. A method for configuring a physical downlink control channel (PDCCH) resource, performed by a terminal, comprising:
determining a candidate configuration set of a control resource set (CORESET) #0 corresponding to a PDCCH, wherein the candidate configuration set is a first configuration set or a second configuration set, and there is at least one different configuration between the first configuration set and the second configuration set; and
receiving first indication information sent by a network device, wherein the first indication information indicates a configuration of the CORESET#0 from the candidate configuration set.

10. The method of claim 9, wherein determining the candidate configuration set of the CORESET#0 corresponding to the PDCCH comprises:
determining the candidate configuration set based on an operating frequency band of the network device and the terminal.

11. The method of claim 10, wherein,
in a case that the operating frequency band belongs to a first frequency band, the candidate configuration set is the first configuration set; or
in a case that the operating frequency band does not belong to a first frequency band, the candidate configuration set is the second configuration set.

12. The method of claim 9, wherein determining the candidate configuration set of the CORESET#0 corresponding to the PDCCH comprises:
determining the candidate configuration set based on a synchronization signal block (SSB) sent by the network device to the terminal.

13. The method of claim 12, wherein,
in a case that the SSB is completely sent to the terminal, the candidate configuration set is determined to be the second configuration set; or
in a case that the SSB is not completely sent to the terminal, the candidate configuration set is determined to be the first configuration set.

14. The method of claim 9, wherein determining the candidate configuration set of the CORESET#0 corresponding to the PDCCH comprises:
receiving second indication information included in a physical broadcast channel (PBCH) sent by the network device, wherein the second indication information indicates that the candidate configuration set is the first configuration set, or the second indication information indicates that the candidate configuration set is the second configuration set; and
determining the candidate configuration set based on the second indication information.

15. The method of claim 14, wherein,
the second indication information is an idle bit in the PBCH; or
the second indication information is an information field in the PBCH indicating a subcarrier spacing; or
the second indication information is an information field in the PBCH indicating an offset between a synchronization signal block (SSB) and the CORESET#0.

16. The method of claim 9, wherein determining the candidate configuration set of the CORESET#0 corresponding to the PDCCH comprises:
receiving a synchronization signal block (SSB) sent by the network device; and
determining the candidate configuration set based on a frequency domain position in which a synchronization raster corresponding to the SSB is located.

17. An apparatus for configuring a physical downlink control channel (PDCCH) resource, comprising:
a processing unit, configured to determine a candidate configuration set of a control resource set (CORESET) #0 corresponding to a PDCCH, wherein the candidate configuration set is a first configuration set or a second configuration set, and there is at least one different configuration between the first configuration set and the second configuration set; and
a transceiver unit, configured to send first indication information to a terminal, wherein the first indication information indicates a configuration of the CORESET#0 from the candidate configuration set.

18. An apparatus for configuring a physical downlink control channel (PDCCH) resource, comprising:
a processing unit, configured to determine a candidate configuration set of a control resource set (CORESET) #0 corresponding to a PDCCH, wherein the candidate configuration set is a first configuration set or a second configuration set, and there is at least one different configuration between the first configuration set and the second configuration set; and
a transceiver unit, configured to receive first indication information sent by a network device, wherein the first indication information indicates a configuration of the CORESET#0 from the candidate configuration set.

19. A communication device, comprising a processor and a memory storing a computer program that, when executed by the processor, causes the communication device to implement the method of any one of claims 1 to 8, or the method of any one of claims 9 to 16.

20. A communication device, comprising a processor and an interface circuit, wherein
the interface circuit is configured to receive code instructions and transmit the code instructions to the processor; and
the processor is configured to execute the code instructions to implement the method of any one of claims 1 to 8, or the method of any one of claims 9 to 16.

21. A computer-readable storage medium for storing instructions that, when executed, the method of any one of claims 1 to 8 is implemented, or the method of any one of claims 9 to 16 is implemented.

22. A communication system, comprising:
a network device, configured to implement the method of any one of claims 1 to 8; and
a terminal, configured to implement the method of any one of claims 9 to 16.
